# EUROPEAN PATENT SPECIFICATION

(11) **EP 3 963 689 B1**
(45) Date of publication and mention of the grant of the patent: **30.04.2025**
(21) Application number: 20754623.5
(22) Date of filing: 22.07.2020
(51) Int. Cl.: H02K 1/18, H02K 7/102, H02K 7/18

(54) **STATOR FOR AN ELECTRIC GENERATOR FOR A WIND TURBINE**
STATOR FÜR EINEN ELEKTRISCHEN GENERATOR EINER WINDTURBINE
STATOR DE GÉNÉRATEUR ÉLECTRIQUE POUR TURBINE ÉOLIENNE

(30) Priority: 13.08.2019 EP 19191461
(43) Date of publication of application: 09.03.2022
(73) Proprietor: Siemens Gamesa Renewable Energy A/S, 7330 Brande (DK)
(72) Inventor: THYGESEN, Claus, 8670 Låsby (DK)
(74) Representative: SGRE-Association
(86) International application number: PCT/EP2020/070677
(87) International publication number: WO 2021/028173

(56) References cited:
- EP-A1- 3 226 383
- GB-A- 2 505 475
- US-A1- 2011 266 909
- US-A1- 2012 217 831
- US-A1- 2017 288 501
- US-A1- 2019 199 164
- US-B2- 7 482 720

## Description

### Field of invention

The present invention relates to the technical field of electric generators, in particular electric generators for wind turbines. Specifically, the present invention relates to a stator assembly for an electric generator, which has a lightened structure. Further, the present invention relates to an electric generator and to a wind turbine which both comprise such a stator assembly.

### Art Background

Wind turbines are manufactured, which comprises an electric generator having a stator assembly having an inner frame structure and an outer frame structure, which surrounds the inner frame structure and which supports the conducting coils of the electric generator. Examples of such a stator assembly are disclosed in EP 322 6383, EP 3252928, GB 2505475 A and US 7482720 B2.

Such an assembly may be significantly heavy in construction, complicated to build and expensive. For large turbines such an assembly is often at the limit of manufacturability and transportation.

Therefore, it is desirable to replace such a structure with another one that is lighter and easier to manufacture.

### Summary of the Invention

This objective may be met by the subject matter according to the independent claim. Advantageous embodiments of the present invention are described by the dependent claims. According to the invention there is provided a stator assembly for an electric generator, as defined in claim 1, in particular an electric generator for a wind turbine is provided. The stator comprises an inner frame structure having an annular shape formed around a rotational axis of the electric generator; and an outer frame structure formed around the center axis and surrounding the inner frame structure, the outer frame structure being radially distanced from the inner frame structure. The stator comprises a plurality of spokes distributed around the center axis and connecting the inner frame structure and the outer frame structure.

The described spoked stator assembly permits achieving a lighter structure with respect to the prior art. The spokes radially extend between the inner and the outer frame structure providing the required structural mechanical properties to the stator with a lower weight with respect to the prior art.

According to the invention, the outer frame structure comprises two outer rings coaxial with the rotational axis. The inner frame structure comprises an inner ring coaxial with the rotational axis Y. In such embodiments, each spoke provides a structural connection between the inner rings and the two outer rings. The use of rings permits to minimize also the weight of both the inner frame structure and the outer frame structure.

According to the invention, each spoke has a divergent shape extending from a vertex fixed to the inner ring and diverging towards the two outer rings. This provides a simple, light and effective geometry for connecting the inner ring with the outer rings.

According to embodiments of the invention, the stator further comprises an intermediate frame structure attached to at least a portion of the plurality of spokes, the intermediate frame structure being radially comprised between the inner frame structure and the outer frame structure. The intermediate frame structure may include an annular flange at least partially surrounding the inner frame structure around the rotational axis. The intermediate frame structure provides a support for attaching components of the stator, for example:
at least one turning device attached to the stator intermediate frame structure and including an actuator and a toothed wheel being drivable by the actuator, the toothed wheel being engaged with the toothed profile for turning the rotor, and/or
at least one brake caliper attached to the intermediate frame structure, the brake caliper being active on the annular device for slowing down the rotation of the rotor around the rotational axis, and/or
a rotor lock system attached to intermediate frame structure, which comprises at least one piston axially shiftable along the rotational axis for engaging at least a hole provided on the annular device in order to block and lock the rotor in a desired angular position about the rotational axis.

The aspects defined above and further aspects of the present invention are apparent from the examples of embodiment to be described hereinafter and are explained with reference to the examples of embodiment. The invention will be described in more detail hereinafter with reference to examples of embodiment, however the invention is solely defined by the appended claims.

### Brief Description of the Drawing

- Figure 1: shows a schematic view of a wind turbine comprising an electric generator.
- Figure 2: shows a partial axonometric detailed view of the electric generator of fig. 1, including a stator according to an embodiment of the present invention.
- Figure 3: shows another partial axonometric view of the electric generator of fig. 2.
- Figure 4: shows another partial axonometric view of the electric generator of fig. 2.
- Figure 5: shows another partial axonometric view of the electric generator of fig. 2.

### Detailed Description

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

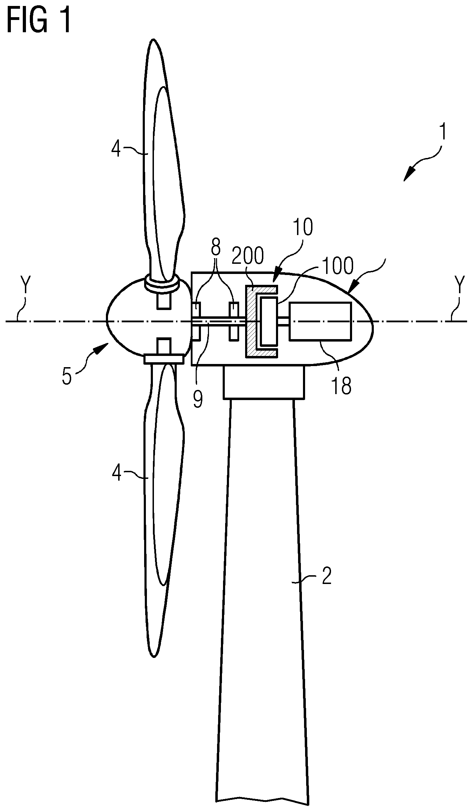

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y. The blades 4 extend substantially radially with respect to the rotational axis Y and along a respective longitudinal axis X. In general, when not differently specified, the terms axial, radial and circumferential in the following are made with reference to the rotational axis Y. The wind turbine 1 comprises an electric generator 10, including a stator 100 and a rotor 200. The rotor 200 is rotatable with respect to the stator 100 about the rotational axis Y. The wind rotor 5 is rotationally coupled with the electric generator 10 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y. In order to provide an AC power signal being matched with a utility grid the electric output of the electric generator 10 is electrically connected to a power converter 18 provided in the nacelle 3. Such converter may however also be placed outside the nacelle, e.g. within or even outside the tower 2.

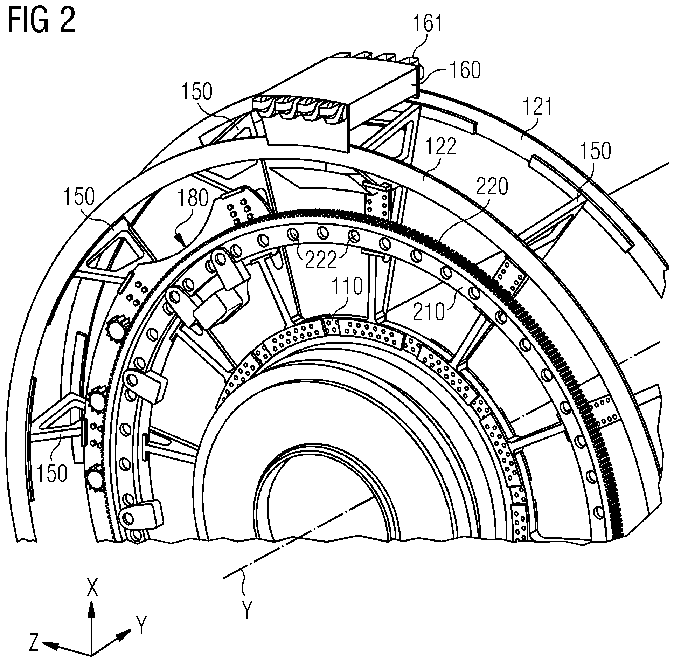

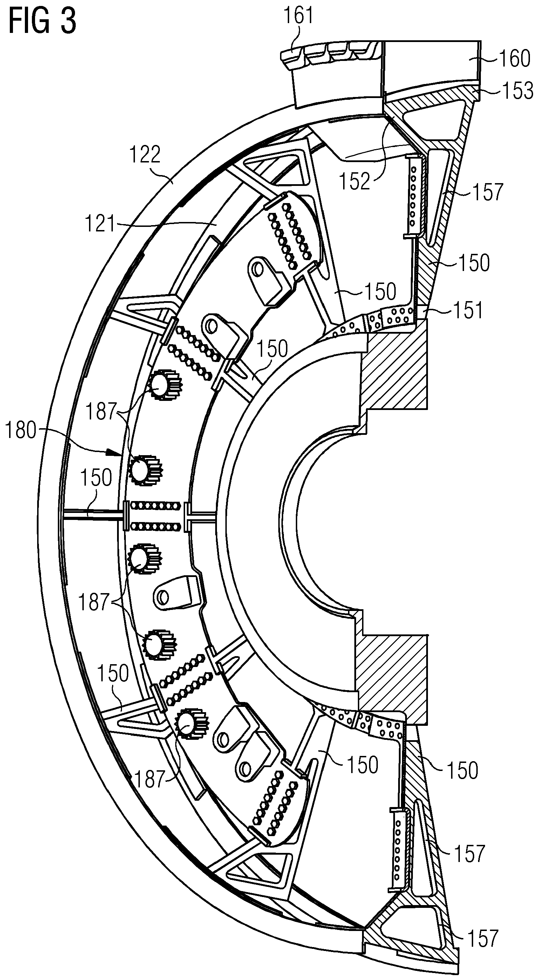

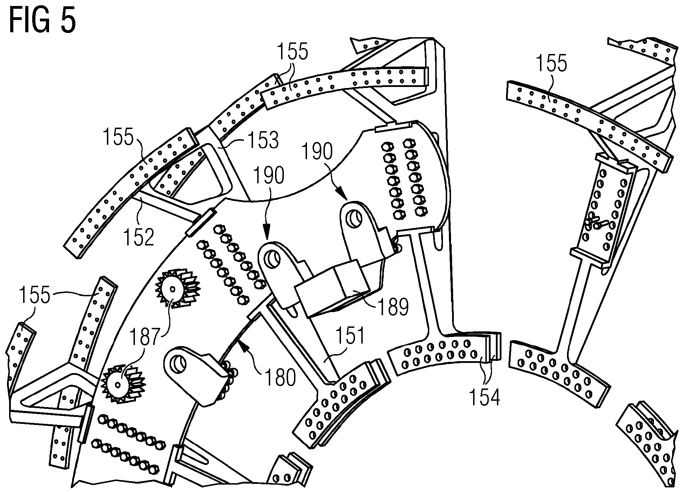

**Figures 2** to **5** show in more detail a partial representation of the electric generator 10.

The stator 100 comprises an inner frame structure 110 having an annular shape formed around the rotational axis Y. According to the exemplary embodiment here described the inner frame structure is realized by means of an internal ring 110 coaxial with the rotational axis Y. According to other embodiments (not shown in the attached figures) the inner frame structure is realized by means of other annular structures.

The stator 100 comprises an outer frame structure formed around the center axis Y and surrounding the inner frame structure 110, the outer frame structure being radially distanced from the inner frame structure 110. According to the exemplary embodiment here described the outer frame structure is realized by means of two outer rings 121, 122 coaxial with the rotational axis Y and having the same diameter, which is greater than the diameter of the internal ring 110. The two outer rings 121, 122 are distanced from one another along the longitudinal axis Y. The stator 100 further comprises a plurality of stator segments 160 (only one stator segment is shown in the attached figure), each comprising at least one conductor coil 161 in which during normal operation of the electric generator 10 magnetic induction takes place. According to the exemplary embodiment here described each of the stator segments 160 is fixed to both of the two outer rings 121, 122, for example by means of a plurality of bolts.

The stator 100 further comprises a plurality of spokes 150 distributed around the longitudinal axis Y and connecting the inner frame structure 110 and the outer frame structure 121, 122. The plurality of spokes 150 may be regularly distributed around the longitudinal axis Y. According to the exemplary embodiment here described each of the plurality of spokes 150 is fixed to the internal ring 110 and to the outer rings 121, 122, for example by means of respective pluralities of bolts or by welding. Each spoke 150 has a flat shape, basically lying along a respective radial plane including the longitudinal axis Y. Each spoke 150 has a divergent shape extending from a first vertex 151 and diverging radially outward up to a second and a third vertex 152, 153. At the first vertex 151, each spoke 150 comprises two curved internal fins 154, which are coaxial with the longitudinal axis Y. The two internal fins 154 are fixed to the internal ring 110, by means of respective pluralities of bolts or by welding. At each of the second and third vertexes 152, 153, each spoke 150 comprises a curved outer fin 155, which is coaxial with the longitudinal axis Y. The two outer fins 155 of each spoke 150 are respectively fixed to the two outer rings 121, 122. Each spoke 150 may comprise one or more holes 157 (two holes 157 are provided for each spoke 150 in the exemplary embodiment of the attached figures), for reducing the weight of the each spoke 150 and therefore of the stator 100. According to another exemplary embodiment (not shown) of the invention each spoke may have on open configuration, extending according to a "V" shape between the first vertex 151 and the second and third vertexes 152, 153. According to another exemplary embodiment (not shown) of the invention each spoke may have a simple close triangular configuration having three vertexes 151, 152, 153. According to another exemplary embodiment (not shown) of the invention each spoke may a simpler linear and pure radial configuration connecting the inner frame structure and the outer frame structure 121, 122. In the latter embodiment the outer frame structure may still comprise two rings 121, 122, connected to each other by means of other elements parallel to the longitudinal axis Y.

Figures 2 to 5 further show an annular device 210 which is fixed to the rotor 200 (not further represented and described). The annular device 210 is an annular planar flange extending for 360° around the longitudinal axis Y, between the inner frame structure 110 and the outer frame structure 121, 122. The annular planar flange 210 is therefore basically lying on plane orthogonal to the rotational axis Y. The annular device 210 comprises a toothed profile 220 provided on a circular edge facing the outer frame structure 121, 122. The annular device 210 is used for rotating the rotor 200 in a controlled manner, e.g. for mounting and maintenance procedures up to an angular desired position about the rotational axis Y and for slowing down a rotational movement of the rotor 200 in a controlled manner.

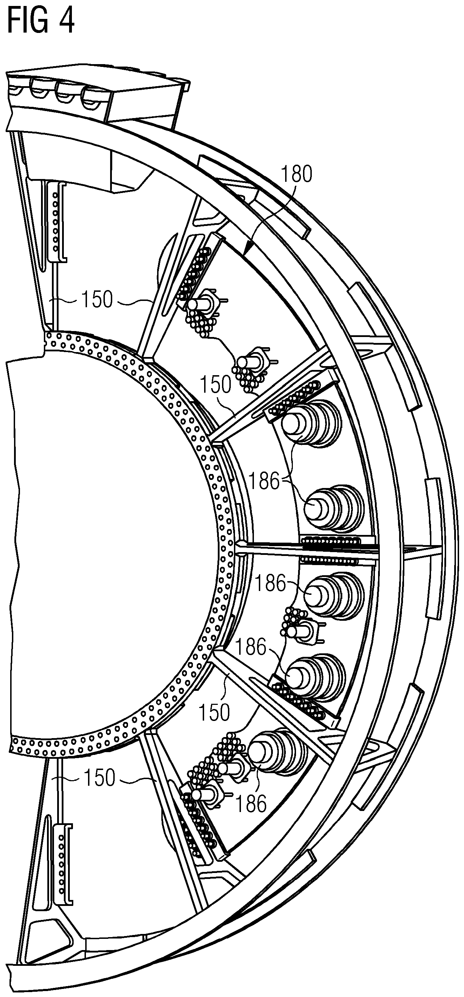

The stator 100 further comprises an intermediate frame structure 180 attached to a portion of the plurality of spokes 150. According to another exemplary embodiment (not shown) the intermediate frame structure 180 is attached to all the spokes 150. The intermediate frame structure 180 is radially comprised between the inner frame structure 110 and the outer frame structure 121, 122. According to the exemplary embodiment here described the intermediate frame structure 180 is a planar annular flange partially surrounding the inner frame structure 110 around the rotational axis Y, i.e. the planar annular flange circumferentially extends for less than 360° around the longitudinal axis Y. The annular planar flange 180 is basically lying on plane orthogonal to the rotational axis Y. The stator 100 further comprises on or more turning devices 185 (five turning devices 185 are shown in figure 4) attached to the stator intermediate frame structure 180. Each turning device 185 includes an actuator 186 and a toothed wheel 187. Each toothed wheel 187 is drivable by the actuator 186 and is engaged with the toothed profile 220 for turning the rotor 200 in a controlled manner. The turning devices 185 can cause the rotor 200 to move in a controlled manner such that it will be brought into a predetermined angular position. At the predetermined angular position, the movement of the rotor assembly will be stopped by stopping the operation of the turning device. This can be achieved simply by stopping the operation of the actuator. Additionally, a brake system and/or a mechanical blocking system may be used in order to maintain a proper angular position of the rotor assembly. The brake system is provided by means of one or more brake calipers 189 attached to the intermediate frame structure 180. Each brake caliper is active on the annular device 210 for slowing the rotation of the rotor 200 around the rotational axis Y. The brake calipers, when activated, may also be used to prevent movement of the rotor 200 once brought to a stop.

The stator 100 further comprises a rotor lock system 190 attached to intermediate frame structure 180, which comprises at least one piston 191 axially shiftable along the rotational axis Y for engaging at least a hole 222 provided on the annular device 210 in order to block and lock the rotor 200 in a desired angular position about the rotational axis Y. According to the exemplary embodiment here described, the annular device 210 comprises a plurality of holes 222 regularly distributed around the rotational axis Y. For example, N holes 222 may be provided on the annular device 210 for blocking the rotor 200 at N respective positions, each angular position being distanced of 360°/N from an adjacent angular position.

## Claims

1. A stator (100) for an electric generator (10), in particular for a wind turbine (1), the stator (100) comprising:
an inner frame structure (110) having an annular shape formed around a rotational axis (Y) of the electric generator (10), the inner frame structure (110) comprising an inner ring coaxial with the rotational axis (Y); and
an outer frame structure (121, 122) formed around the rotational axis (Y) and surrounding the inner frame structure (110), the outer frame structure (121, 122) being radially distanced from the inner frame structure (110) and comprising two outer rings (121, 122), which are distanced from one another along the rotational axis (Y),
wherein the stator (100) comprises a plurality of spokes (150) distributed around the rotational axis (Y) and connecting the inner frame structure (110) and the outer frame structure (121, 122),
wherein the plurality of spokes (150) are fixed to the internal ring (110) and to the outer rings (121, 122),
**characterized in that**
each spoke (150) has a divergent shape extending from a vertex (151) fixed to the inner ring (110) and diverges towards the two outer rings (121, 122).

2. The stator (100) of claim 1, further comprising
a plurality of stator segments (160), each comprising at least one conductor coil (161) in which during normal operation of the electric generator (10) magnetic induction takes place, wherein
the stator segments (160) are mounted on the outer frame structure (121, 122).

3. An electric generator (10), in particular for a wind turbine (1), including:
a stator (100) of any of the previous claims,
a rotor (200) including an annular device (210) which comprises toothed profile (220);
wherein the stator (100) further comprises:
an intermediate frame structure (180) attached to at least a portion of the plurality of spokes (150), the intermediate frame structure (180) being radially comprised between the inner frame structure (110) and the outer frame structure (121, 122),
at least one turning device (185) attached to the stator intermediate frame structure (180) and including an actuator (186) and a toothed wheel (187) being drivable by the actuator (186), the toothed wheel (187) being engaged with the toothed profile (220) for turning the rotor (200).

4. The electric generator (10) of claim 3, wherein the intermediate frame structure (180) include an annular flange at least partially surrounding the inner frame structure (110) around the rotational axis (Y).

5. The electric generator (10) of claim 3 or 4, further comprising
at least one brake caliper (189) attached to the intermediate frame structure (180), the brake caliper being active on the annular device (210) for slowing down the rotation of the rotor around the rotational axis (Y).

6. The electric generator (10) of claim 3 or 4 or 5, further comprising
a rotor lock system (190) attached to intermediate frame structure (180), which comprises at least one piston (191) axially shiftable along the rotational axis (Y) for engaging at least a hole (222) provided on the annular device (210) in order to block the rotor (200) in a desired angular position about the rotational axis (Y).

7. A wind turbine (1) including the electric generator (10) of any of the claims 3 to 6.

## Patentansprüche

1. Stator (100) für einen elektrischen Generator (10), insbesondere für eine Windenergieanlage (1), wobei der Stator (100) Folgendes umfasst:
eine Innenrahmenstruktur (110) mit einer ringförmigen Form, die um eine Drehachse (Y) des elektrischen Generators (10) gebildet ist, wobei die Innenrahmenstruktur (110) einen Innenring koaxial zu der Drehachse (Y) umfasst; und
eine Außenrahmenstruktur (121, 122), die um die Drehachse (Y) gebildet ist und die Innenrahmenstruktur (110) umgibt, wobei die Außenrahmenstruktur (121, 122) radial von der Innenrahmenstruktur (110) beabstandet ist und zwei Außenringe (121, 122) umfasst, die entlang der Drehachse (Y) voneinander beabstandet sind,
wobei der Stator (100) eine Vielzahl von Speichen (150) umfasst, die um die Drehachse (Y) verteilt sind und die Innenrahmenstruktur (110) und die Außenrahmenstruktur (121, 122) verbinden,
wobei die Vielzahl von Speichen (150) an dem Innenring (110) und an den Außenringen (121, 122) befestigt sind, **dadurch gekennzeichnet, dass** jede Speiche (150) eine divergierende Form aufweist, die sich von einem Scheitelpunkt (151) erstreckt, der an dem Innenring (110) befestigt ist, und zu den zwei Außenringen (121, 122) divergiert.

2. Stator (100) nach Anspruch 1, ferner Folgendes umfassend:
eine Vielzahl von Statorsegmenten (160), die jeweils mindestens eine Leiterspule (161) umfassen, in der im Normalbetrieb des elektrischen Generators (10) eine magnetische Induktion stattfindet, wobei
die Statorsegmente (160) auf der Außenrahmenstruktur (121, 122) montiert sind.

3. Elektrischer Generator (10), insbesondere für eine Windenergieanlage (1), beinhaltend:
einen Stator (100) nach einem der vorhergehenden Ansprüche, einen Rotor (200), der eine ringförmige Vorrichtung (210) beinhaltet, die ein gezahntes Profil (220) umfasst;
wobei der Stator (100) ferner Folgendes umfasst:
eine Zwischenrahmenstruktur (180), die an mindestens einem Teil der Vielzahl von Speichen (150) angebracht ist, wobei die Zwischenrahmenstruktur (180) radial zwischen der Innenrahmenstruktur (110) und der Außenrahmenstruktur (121, 122) umfasst ist,
mindestens eine Drehvorrichtung (185), die an der Statorzwischenrahmenstruktur (180) angebracht ist und einen Aktuator (186) und ein Zahnrad (187) beinhaltet, die durch den Aktuator (186) antreibbar sind, wobei das Zahnrad (187) mit dem Zahnprofil (220) zum Drehen des Rotors (200) in Eingriff steht.

4. Elektrischer Generator (10) nach Anspruch 3, wobei die Zwischenrahmenstruktur (180) einen ringförmigen Flansch beinhaltet, der die Innenrahmenstruktur (110) zumindest teilweise um die Drehachse (Y) umgibt.

5. Elektrischer Generator (10) nach Anspruch 3 oder 4, ferner Folgendes umfassend:
mindestens einen Bremssattel (189), der an der Zwischenrahmenstruktur (180) angebracht ist, wobei der Bremssattel an der ringförmigen Vorrichtung (210) zur Verlangsamung der Drehung des Rotors um die Drehachse (Y) aktiv ist.

6. Elektrischer Generator (10) nach Anspruch 3 oder 4 oder 5, ferner Folgendes umfassend:
ein an der Zwischenrahmenstruktur (180) angebrachtes Rotorverriegelungssystem (190), das mindestens einen entlang der Drehachse (Y) axial verschiebbaren Kolben (191) zum Eingriff in mindestens ein an der ringförmigen Vorrichtung (210) vorgesehenes Loch (222) umfasst, um den Rotor (200) in einer gewünschten Winkelposition um die Drehachse (Y) zu blockieren.

7. Windenergieanlage (1), die den elektrischen Generator (10) nach einem der Ansprüche 3 bis 6 beinhaltet.

## Revendications

1. Stator (100) pour un générateur électrique (10), en particulier pour une éolienne (1), le stator (100) comprenant :
une structure de cadre interne (110) ayant une forme annulaire formée autour d'un axe de rotation (Y) du générateur électrique (10), la structure de cadre interne (110) comprenant une bague interne coaxiale avec l'axe de rotation (Y) ; et
une structure de cadre externe (121, 122) formée autour de l'axe de rotation (Y) et entourant la structure de cadre interne (110), la structure de cadre externe (121, 122) étant radialement éloignée de la structure de cadre interne (110) et comprenant deux bagues externes (121, 122), qui sont éloignées l'une de l'autre le long de l'axe de rotation (Y),
dans lequel le stator (100) comprend une pluralité de rayons (150) distribués autour de l'axe de rotation (Y) et raccordant la structure de cadre interne (110) et la structure de cadre externe (121, 122),
dans lequel la pluralité de rayons (150) sont fixés à la bague interne (110) et aux bagues externes (121, 122),
**caractérisé en ce que** chaque rayon (150) présente une forme divergente s'étendant depuis un vertex (151) fixé à la bague interne (110) et diverge vers les deux bagues externes (121, 122).

2. Stator (100) selon la revendication 1, comprenant en outre
une pluralité de segments de stator (160), comprenant chacun au moins une bobine conductrice (161) dans laquelle durant un fonctionnement normal du générateur électrique (10) a lieu une induction magnétique, dans lequel
les segments de stator (160) sont montés sur la structure de cadre externe (121, 122).

3. Générateur électrique (10), en particulier pour une éolienne (1), incluant :
un stator (100) selon l'une quelconque des revendications précédentes,
un rotor (200) incluant un dispositif annulaire (210) qui comprend un profil denté (220) ;
dans lequel le stator (100) comprend en outre :
une structure de cadre intermédiaire (180) fixée à au moins une portion de la pluralité de rayons (150), la structure de cadre intermédiaire (180) étant radialement comprise entre la structure de cadre interne (110) et la structure de cadre externe (121, 122),
au moins un dispositif tournant (185) fixé à la structure de cadre intermédiaire (180) du stator et incluant un actionneur (186) et une roue dentée (187) pouvant être entraînée par l'actionneur (186), la roue dentée (187) étant engagée avec le profil denté (220) pour faire tourner le rotor (200).

4. Générateur électrique (10) selon la revendication 3, dans lequel la structure de cadre intermédiaire (180) inclut une collerette annulaire entourant au moins partiellement la structure de cadre interne (110) autour de l'axe de rotation (Y).

5. Générateur électrique (10) selon la revendication 3 ou 4, comprenant en outre
au moins un étrier de frein (189) fixé à la structure de cadre intermédiaire (180), l'étrier de frein étant actif sur le dispositif annulaire (210) pour ralentir la rotation du rotor autour de l'axe de rotation (Y).

6. Générateur électrique (10) selon la revendication 3 ou 4 ou 5, comprenant en outre
un système de verrouillage de rotor (190) fixé à la structure de cadre intermédiaire (180), qui comprend au moins un piston (191) pouvant être axialement décalé le long de l'axe de rotation (Y) pour engager au moins un trou (222) prévu sur le dispositif annulaire (210) afin de bloquer le rotor (200) dans une position angulaire souhaitée autour de l'axe de rotation (Y).

7. Éolienne (1) incluant le générateur électrique (10) selon l'une quelconque des revendications 3 à 6.
